# EUROPEAN PATENT SPECIFICATION

(11) **EP 0 909 465 B1**
(45) Date of publication and mention of the grant of the patent: **02.04.2003**
(21) Application number: 97933170.9
(22) Date of filing: 25.06.1997
(51) Int. Cl.: H01M 8/02

(54) **POLYMER ELECTROLYTE MEMBRANE FUEL CELL WITH BIPOLAR PLATE HAVING INTEGRALLY MOLDED CONDUCTIVE INSERT**
POLYMERELEKTROLYT-MEMBRAN-BRENNSTOFFZELLE MIT BIPOLAREM PLATTE MIT EINSTÜCKIG, LEITENDEM EINSATZTEIL
PILE A COMBUSTIBLE A MEMBRANES ELECTROLYTIQUES EN POLYMERE AYANT UNE PLAQUE BIPOLAIRE A CONDUCTEUR MOULE INTEGRE

(30) Priority: 25.06.1996 JP 18270096
(43) Date of publication of application: 21.04.1999
(73) Proprietor: E.I. DU PONT DE NEMOURS AND COMPANY, Wilmington Delaware 19898 (US); MATSUSHITA ELECTRIC INDUSTRIAL CO., LTD., Kadoma-shi, Osaka 571-8501 (JP)
(72) Inventor: MUKOHYAMA, Atsushi, Wilmington, Delaware 19803 (US); TAKEDA, Toshihiko, Aoba-ku Yokohama-shi Kanagawa 225 (JP); UCHIDA, Makoto, Osaka 573 (JP); FUKUOKA, Yuko, Fushimi-ku Kyoto 612 (JP)
(74) Representative: Matthews, Derek Peter
(86) International application number: US9711073
(87) International publication number: WO97050139

(56) References cited:
- WO-A-93/13566
- WO-A-96/18217
- DE-A- 4 309 976
- US-A- 3 589 942
- US-A- 4 124 478
- US-A- 5 187 025
- PATENT ABSTRACTS OF JAPAN vol. 014, no. 085 (E-0890), 16 February 1990 & JP 01 296569 A (HITACHI LTD), 29 November 1989, & CHEMICAL ABSTRACTS, vol. 113, no. 12, 17 September 1990 Columbus, Ohio, US; abstract no. 100895,
- PATENT ABSTRACTS OF JAPAN vol. 012, no. 099 (E-594), 31 March 1988 & JP 62 229765 A (SHIN KOBE ELECTRIC MACH CO LTD), 8 October 1987, & CHEMICAL ABSTRACTS, vol. 108, no. 4, 25 January 1988 Columbus, Ohio, US; abstract no. 24609,
- PATENT ABSTRACTS OF JAPAN vol. 015, no. 050 (E-1030), 6 February 1991 & JP 02 281567 A (HITACHI LTD), 19 November 1990, & CHEMICAL ABSTRACTS, vol. 114, no. 26, 1 July 1991 Columbus, Ohio, US; abstract no. 250724,
- PATENT ABSTRACTS OF JAPAN vol. 011, no. 138 (E-503), 2 May 1987 & JP 61 279069 A (HITACHI LTD), 9 December 1986, & CHEMICAL ABSTRACTS, vol. 106, no. 16, 20 April 1987 Columbus, Ohio, US; abstract no. 123151,
- R.H.BLACKMER ET AL: "Ion-exchange membrane" ASE JOURNAL, vol. 70, no. 1, January 1962, pages 82-86, XP002044995
- PATENT ABSTRACTS OF JAPAN vol. 096, no. 010, 31 October 1996 & JP 08 162131 A (AISIN AW CO LTD;AQUEOUS RES:KK), 21 June 1996,
- CHEMICAL ABSTRACTS, vol. 101, no. 16, 15 October 1984 Columbus, Ohio, US; abstract no. 134012, XP002044996 & PROC.-ELECTROCHEM. SOC., vol. 84, no. 5, 1984, pages 554-573,

## Description

### FIELD OF THE INVENTION

This invention relates a polymer electrolyte membrane fuel cell for direct generation of electrical energy from fuel and an oxidizing agent and, especially, it relates to a bipolar plate structure for a fuel cell that has a high degree of resistance to corrosive electrolytes and is easily manufactured.

### BACKGROUND OF THE INVENTION

In recent years, polymer electrolyte membrane fuel cells have been developed for their advantages over conventional electrical power sources in high power generation, high efficiency, etc. Polymer electrolyte membrane fuel cells typically have a multiplicity of unit cells in an stacked arrangement, each comprised of a cathode and an anode which are opposingly positioned gas diffusion electrodes. A polymer electrolyte membrane is located between and is maintained in contact with the electrodes. Bipolar plates are provided between cells and contact the gas diffusion electrodes of adjacent cells and each side of the bipolar plate provides gas passages to the electrode. A fuel cell generates power through electrochemical reaction between the anode and cathode when supplying fuel and oxidizing agent to the fuel passages on the anode side and the oxidizing agent chamber on the cathode side, respectively.

In a fuel cell, when fuel and oxidizing agent are independently and simultaneously supplied to the different electrodes, an electrochemical potential is generated across these electrodes. When an electrical load is placed across these electrodes, a current flows between them and, as a result, chemical energy is directly converted to electrical energy at high efficiency as mentioned above, by having the fuel oxidized at one electrode and the oxidizing agent reduced at the other electrode, both in an electrocatalytic manner.

The polymer electrolyte membrane in such fuel cells is advantageously provided by a high molecular weight ion-exchange fluorine-containing polymer having one or more functional groups which can be sulfonic acid groups, carboxylic acid groups, phosphoric acid groups or phosphonic acid groups. The polymer of the ion-exchange membrane of the electrolyte is preferably a copolymer of tetrafluoroethylene and fluorovinyl compound which is expressed by CF₂=CF-(OCF₂CFX)ₘ-O_{q}-(CF₂)ₙA (where m=0-3, n=0-12, q=0 or 1, X=F or CF₃, A=a sulfonic acid functional group, a carboxylic-acid functional group, a phosphoric acid functional group).

Preferable examples of such fluorovinyl compounds can be:

CF₂=CFO(CF₂)₁₋₈A

CF₂=CFO CF₂CF(CF₃)O(CF₂)₁₋₈A

CF₂=CF(CF₂)O₀₋₈A

CF₂=CF(O CF₂CF(CF₃))₁₋₅ (CF₂)₂A

Alternatively, perfluoroolefins, such as hexafluoropropylene, chlorotrifluoroethylene, perfluoroalkoxyvinyl ether can be used instead of the tetrafluoroethylene, as the monomer that comprises the fluorocarbon polymer with functional groups.

If necessary after copolymerization, the polymer is converted to a proton-exchanging functional group, for example, by post-treatment such as hydrolysis, etc. The conversion capacity of a component with functional group is defined by the number of moles of the functional group per 1 g and normally it is measured by the titration method. In general, a conversion capacity of the component with functional group of 0.8-2 meq/g and 0.9-2 meq/g is preferred. When it is less than 0.8 meq/g, the resistance becomes high and performance suffers. Also, when it is above 2 meq/g, the standard strength of the membrane is decreased.

Sulfonated perfluorocarbon membrane such as that commercially available from E.I. du Pont de Nemours and Company, Wilmington, Delaware, USA, under the trademark NAFION® is advantageously used as the polymer electrolyte membrane because of its strength, dimensional stability and electrical properties.

Bipolar plates in polymer electrolyte fuel cells are typically machined from a carbon block with strong corrosion resistance, no gas permeability and with good electrical conductivity. The fuel/oxidizing agent supply and discharge passages are machined on both sides of the bipolar plate and, since the concave/convex shape and layout of the concave/convex parts of the bipolar plate of these passages determine the uniform distribution of the gas flow at a uniform density onto the electrode surface, the structures are extremely complex. Therefore, manufacture of bipolar plates is very difficult. In addition, when a bipolar plate is made of standard grade carbon, a leak current sometimes runs in the bipolar plate across the electrolyte and electrodes and corrosion can occur in the bipolar plate. It has been difficult to manufacture from a single material of a bipolar plate for polymer electrolyte fuel cells which exhibits a high degree of resistance to the corrosive electrolyte, has good current collection function and a high degree of structural integrity.

### SUMMARY OF THE INVENTION

The invention in an improvement in a polymer electrolyte membrane fuel cell comprised of polymer electrolyte membranes, gas diffusion electrodes that sandwich the membranes, and bipolar plates operating as gas separation plates and current collectors with fuel/oxidizing agent supply and discharge passages. An improved bipolar plate is employed comprising a frame of melt-processible polymer of good fluidity and with superior acid and hydrolytic resistance and a carbon plate or corrosion-resistant conductive plate integrally molded into the frame. The carbon or corrosion-resistant metal plate has concave and convex parts on both surfaces which provide the fuel/oxidizing agent supply and discharge passages when the bipolar plate is in contact with the gas diffusion electrodes.

In a preferred form of the present invention, the frame comprises a polymer selected from liquid crystal polymers, a modified polyphenylene oxide, a polyphenylene sulfide, thermoplastic fluorine resins and polyolefins. More preferably, the polymer of the frame is selected from liquid crystal polymers and polyolefins.

In another preferred form of the present invention, the bipolar plate comprises a corrosion-resistant conductive plate which is a corrosion resistant metal plate or a metal plate surface treated with metal carbide or metal nitride.

In another preferred form of the present invention, the frame is formed using insert molding.

This invention provides a polymer electrolyte membrane fuel cell in which a bipolar plate is formed by a melt-processible polymer of good fluidity, good acid and hydrolytic resistance, and current collection function, and with improvement of the gas-passages. This is accomplished while providing resistance to corrosive electrolytes, simple construction, easy manufacturing, reduced weight, and low manufacturing cost. The bipolar plates used in a preferred fuel cell in accordance with the invention provide high strength, high elasticity, good dimensional stability, good corrosion resistance, a high degree of structural integrity and good core properties.

### DETAILED DESCRIPTION

In the polymer electrolyte membrane fuel cell of this invention, the frame of the bipolar plate that surrounds the carbon plate or corrosion-resistant conductive plate with concave and convex parts, is injection-molded with a melt-processible polymer of good fluidity and having good acid resistance and hydrolysis resistance. Preferred molding methods include insert molding, press fitting, and caulking. Among above molding methods, the insert molding method is most preferable for this invention. The carbon plate or corrosion-resistant conductive plate, preferably, metal plate or metal plate treated with metal carbide or metal nitride, is set and closed in an injection molding cavity-die having core and cavity dies. Such integrally molded bipolar plate has good strength, high elasticity, good dimensional stability, high heat resistance, corrosion resistance, a high degree of structural integrity and core properties. In addition, size/weight reduction and reduction of manufacturing costs is provided for fuel cells of laminated unit cells comprised of such bipolar plate and membrane electrode composites consisting of a cathode, anode, and electrolyte.

Examples of melt-processible polymers with good fluidity and with good acid resistance, hydrolytic resistance and fluidity for molding of the frame can be a liquid crystal polymer, a modified polyphenylene oxide, a polyphenylene sulfide, thermoplastic fluorinated resins and polyolefins. However, the polymer is not limited to the polymers listed above as long as properties are maintained for a long period at 50-80°C and in saturated water vapor, which are the normal operating conditions of this fuel cell. A polymer with good fluidity has a sufficiently high flow at its normal processing temperature to form the polymer frame. Liquid crystal polymers are especially preferred since they are highly resistant to hydrolysis, have excellent fluidity needed for molding and are optimal for the production of fine structures as those of this invention. Also, liquid crystal polymers have an extremely low metal ion content as compared to other polymers; therefore, they do not inhibit ion conduction of the polymer electrolyte membrane. Preferable components of a suitable liquid crystal polymer are selected from the compounds: i) comprised of 1 or more aromatic dicarboxylic acid and alicyclic dicarboxylic acid; ii) comprised of 1 or more aromatic diol, alicyclic diol and aliphatic diol; iii) comprised of 1 or more aromatic hydroxycarboxlic acid; iv) comprised of 1 or more aromatic thiol carboxylic acid; v) comprised of 1 or more aromatic dithiol and aromatic thiolphenol, and; vi) comprised of 1 or more aromatic hydroxylamine and aromatic diamine, etc., and polymers that form anisotropic molten phases are polyesters that form anisotropic molten phase, comprised of a combination of a) polyester of (i) and (ii); b) polyester of only (iii); c) polyester of (i), (ii), and (iii); d) polydiol ester of only (iv); e) polythiol ester of (i) and (v); f) polythiol ester of(i), (iv), and (v); g) polyester amide of(i), (iii) and (vi); h) polyester amide of(i), (ii), (iii), and (vi), etc.

For a liquid crystal polymer such as the polyester-type polymer sold by E.I. du Pont de Nemours and Company under the trademark ZENITE® HX 6130, typical molding conditions for the formation of the frame are, for example, 60°C die temperature, 350-360°C resin temperature, 0.5-1 sec pressure retention time and approximately 10 sec molding cycle. The good fluidity of ZENITE® HX 6130 (30% glass reinforced LCP) is also illustrated by its spiral flow of 24 cm flow for 0.5 mm thickness under 800 kg/cm² at 355°C. Spiral flow is determined by measuring the distance that the molten polymer flows into a specific thickness mold with a spiral shape at 60°C.

CRASTIN® SK645FR 30% glass reinforced polybutylene terephthalate polymer sold by E.I. du Pont de Nemours and Company also has good fluidity for use in the present invention with a spiral flow of 7.0 cm flow for 0.8 mm thickness under 800 kg/cm² at 255°C.

Polyethylene is produced by polymerization of ethylene and is a mixture with a few to a few hundred thousand basic molecular unit -(CH)-connected in a chain form, and it is considered to be a long chain hydrocarbon with a molecular weight distribution. When the average molecular weight increases, the softening point increases a little. There are the following types of polyethylene, depending on the manufacturing method. Polyethylene is manufactured by direct polymerization of ethylene gas, but it can be produced under high pressure, medium pressure, or low pressure, each method produces polyethylene with slightly different properties.

Polyethylene obtained by the high-pressure method has a density of 0.91-0.94, that obtained by the medium/low pressure method has a density of 0.91-0.97 in a wider range, and, in this wider range, that having ≥ 0.94 density and that having < 0.94 density re classified as high-density polyethylene and linear low-density polyethylene, respectively. The molding conditions of polyethylene are, in general, 150-210°C resin temperature, 40-50°C mold temperature and 20-40 seconds molding cycle.

Polypropylene is a crystalline polymer material in which the polypropylene units -(CH₂CH(CH₃))- are regularly and spatially arranged and its specific gravity is next lightest to that of polymethylpentene. Its melting point is 165°C and it has good compressive strength, impact strength and high surface hardness. It is fluid and it can be molded into a thin or complex shape. Its shrinkage in molding is less than that of polyethylene and its bi-directional shrinkage difference is small. General molding conditions of polypropylene are 190-230°C resin temperature, 40-80°C mold temperature, and 20-40 second molding cycle.

Polystyrene is a polymer produced by polymerization of a styrene monomer -(CH₂-CH(C₆H₅))- and has good moldability, transparency, dimensional stability, and water resistance. Also, it is highly resistant to chemicals such as those of acid and alkali groups. The molding conditions of polystyrene are 200-230°C resin temperature, 30-50°C mold temperature, and 30-60 second molding cycle.

Polymethylpentene is 4-methylpentene-1, polymerized with a Ziegler-Natta catalyst, and has the following structure: 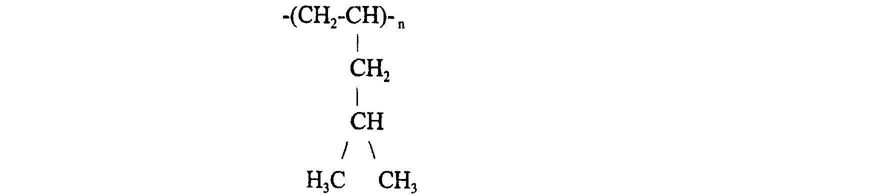 Its melting point is 230-240°C, and its specific gravity is 0.83 which is the lightest among the thermoplastic resins. Its chemical resistance is also good.

When the insert plate is a carbon material, carbon, graphite, glassy carbon, high density isotropic carbon, carbon fiber, or graphite foil can be used. As a corrosion resistant conductive plate, a corrosion resistant metal, a metal plate surface treated with metal carbide or metal nitride, a metal or a carbon with its corrosion resistance or conductance being improved by using a surface treatment such as plating, chemical vapor deposition (CVD) or sputtering or plating with platinum or gold or other corrosion resistant metal can be used for this invention. From the viewpoint of production cost and ease of manufacture, a corrosion resistant metal plate with its surface treated with metal carbide or metal nitride are preferable.

### EXAMPLE

An embodiment of a polymer electrolyte membrane fuel cell of this invention is described below .

The bipolar plate is comprised of a carbon plate, metal plate or metal plate, surface treated with metal carbide or metal nitride, in each case having concave parts and convex parts on both sides and polymer frame that surrounds the above plate. This carbon plate, or metal plate, or metal plate surface treated with metal carbide or metal nitride is inserted into the laminated cell unit so that the tips of the protruding parts make contact with the outside electrode of the membrane electrode component. For example, anode and cathode, which are integrally formed with the high molecular weight electrolyte membrane, sandwich the membrane for collection of electricity. The fuel chambers are formed between the concave part of the carbon plate or metal plate and the anode. An oxidizing agent chamber will be similarly formed by the concave parts on the other side of the plate in contact with cathode. The bipolar plate can be used as the end plate of the stack and, when membrane electrode composites are laminated between bipolar plates, the concave parts of carbon plate or metal plate, assures the gas supply passage to the surfaces of cathode and anode. In addition, the polymer frame has through-holes that connect through the frame to each gas passage means to supply fuel to the fuel chamber. Similar through-holes are located at corresponding positions in opposing end faces of polymer frame and supply an oxidizing agent to the oxidizing agent chamber.

### MANUFACTURING METHOD

The carbon plate or metal plate or metal plate surface treated with metal carbide or metal nitride having concave parts and convex parts on both sides is set in the injection molding cavity die. The die is closed and the melt-processible polymer of good fluidity and good hydrolysis resistance, e.g. liquid crystal polymer, in injected into the cavity for molding of frame that surrounds carbon plate or metal plate or metal plate surface treated with metal carbide or metal nitride. A bipolar plate with an integral insert molding is formed with carbon plate or metal plate positioned in its center.

## Claims

1. A polymer electrolyte membrane fuel cell comprised of polymer electrolyte membranes, gas diffusion electrodes that sandwich the membranes, and bipolar plates operating as gas separation plates and current collectors with fuel/oxidizing agent supply and discharge passages, **characterized by** a bipolar plate having a frame of melt-processible polymer of good fluidity and with superior acid and hydrolytic resistance and a carbon plate or corrosion-resistant conductive plate integrally molded into said frame, said carbon or corrosion-resistant metal plate having concave and convex parts on both surfaces which provide said fuel/oxidizing agent supply and discharge passages when said bipolar plate is in contact with said gas diffusion electrodes.

2. The polymer electrolyte membrane fuel cell of Claim 1 wherein said frame comprises a polymer selected from the group consisting of liquid crystal polymers, a modified polyphenylene oxide, a polyphenylene sulfide, thermoplastic fluorinated resins and polyolefins.

3. The polymer electrolyte membrane fuel cell of Claim 1 wherein said frame comprises a polymer selected from the group consisting of liquid crystal polymers and polyolefins.

4. The polymer electrolyte membrane fuel cell of Claim 1 wherein said bipolar plate comprises a corrosion-resistant conductive plate, said corrosion-resistant conductive plate comprising a corrosion resistant metal plate or a metal plate surface treated with metal carbide or metal nitride.

5. Polymer electrolyte membrane fuel cell of Claim 1 wherein said frame is formed using insert molding.

## Revendications

1. Pile à combustible à membranes électrolytiques en polymère constituée de membranes électrolytiques en polymère, d'électrodes de diffusion de gaz qui prennent les membranes en sandwich et de plaques bipolaires fonctionnant comme plaques de séparation de gaz et dispositifs de prise de courant avec des voies d'amenée et d'évacuation de combustible/agent oxydant, **caractérisée par** une plaque bipolaire ayant un cadre de polymère susceptible d'être traité en fusion de bonne fluidité et avec une résistance acide et hydrolytique supérieure et une plaque de carbone ou plaque conductrice résistante à la corrosion moulée intégrée dans ledit cadre, ladite plaque de carbone ou plaque métallique résistante à la corrosion ayant des parties concaves et convexes sur les deux surfaces qui fournissent lesdites voies d'amenée et d'évacuation de combustible/agent oxydant quand ladite plaque bipolaire est en contact avec lesdites électrodes de diffusion de gaz.

2. Pile à combustible à membranes électrolytiques en polymère selon la revendication 1 dans laquelle ledit cadre comprend un polymère choisi parmi le groupe constitué de polymères à cristaux liquides, d'un polyphénylèneoxyde modifié, d'un sulfure de polyphénylène, de résines thermoplastiques fluorées et de polyoléfines.

3. Pile à combustible à membranes électrolytiques en polymère selon la revendication 1 dans laquelle ledit cadre comprend un polymère choisi parmi le groupe constitué de polymères à cristaux liquides et de polyoléfines.

4. Pile à combustible à membranes électrolytiques en polymère selon la revendication 1 dans laquelle ladite plaque bipolaire comprend une plaque conductrice résistante à la corrosion, ladite plaque conductrice résistante à la corrosion comprenant une plaque métallique résistante à la corrosion ou une surface de plaque métallique traitée avec un carbure de métal ou un nitrure de métal.

5. Pile à combustible à membranes électrolytiques en polymère selon la revendication 1 dans laquelle ledit cadre est formé en utilisant un moulage par insertion.

## Patentansprüche

1. Polymerelektrolytmembran-Brennstoffzelle, die aus Polymerelektrolytmembranen, zwischen die Membranen geschichteten Gasdiffusionselektroden und als Gastrennplatten arbeitenden bipolaren Platten sowie aus Stromkollektoren besteht, mit Zufluß- und Abflußkanälen für Brennstoff/Oxidationsmittel, **gekennzeichnet durch** eine bipolare Platte mit einem Rahmen aus **durch** Schmelzen verarbeitungsfähigem Polymer von guter Fließfähigkeit und hervorragender Säure- und Hydrolysebeständigkeit sowie **durch** eine einstückig in den Rahmen formgepreßte Kohlenstoffplatte oder korrosionsbeständige leitfähige Platte, wobei die Kohlenstoffplatte oder korrosionsbeständige Metallplatte an beiden Oberflächen konkave und konvexe Teile aufweist, welche die Zufluß- und Abflußkanäle für Brennstoff/Oxidationsmittel bilden, wenn sich die bipolare Platte im Kontakt mit den Gasdiffusionselektroden befindet.

2. Polymerelektrolytmembran-Brennstoffzelle nach Anspruch 1, wobei der Rahmen ein Polymer aufweist, das aus der Gruppe ausgewählt ist, die aus Flüssigkristallpolymeren, einem modifizierten Polyphenylenoxid, einem Polyphenylensulfid, thermoplastischen fluorierten Harzen und Polyolefinen besteht.

3. Polymerelektrolytmembran-Brennstoffzelle nach Anspruch 1, wobei der Rahmen ein Polymer aufweist, das aus der Gruppe ausgewählt ist, die aus Flüssigkristallpolymeren und Polyolefinen besteht.

4. Polymerelektrolytmembran-Brennstoffzelle nach Anspruch 1, wobei die bipolare Platte eine korrosionsbeständige leitfähige Platte aufweist, wobei die korrosionsbeständige leitfähige Platte eine korrosionsbeständige Metallplatte oder eine Metallplatte aufweist, die mit Metallcarbid oder Metallnitrid oberflächenbehandelt ist.

5. Polymerelektrolytmembran-Brennstoffzelle nach Anspruch 1, wobei der Rahmen mittels Einsatzformen geformt wird.
